# EUROPEAN PATENT SPECIFICATION

(11) **EP 2 213 083 B1**
(45) Date of publication and mention of the grant of the patent: **31.08.2011**
(21) Application number: 08848950.5
(22) Date of filing: 07.11.2008
(51) Int. Cl.: H04M 1/725

(54) **METHOD OF SELECTING A SET OF PHONEBOOK ENTRIES IN A CARD**
VERFAHREN ZUR AUSWAHL EINES SATZES VON TELEFONBUCHEINTRÄGEN IN EINER KARTE
PROCÉDÉ DE SÉLECTION D'UN ENSEMBLE D'ENTRÉES DE RÉPERTOIRE TÉLÉPHONIQUE DANS UNE CARTE

(30) Priority: 15.11.2007 EP 07301552
(43) Date of publication of application: 04.08.2010
(73) Proprietor: Gemalto SA, 92190 Meudon (FR)
(72) Inventor: BRUN, Alain, F-13400 Aubagne (FR); HALLE, David, F-83200 Toulon (FR); FOESSER, Christophe, F-13600 La Ciotat (FR); MALLET, Lionel, F-13007 Marseille (FR); FAURE, Frédéric, F-13260 Cassis (FR)
(74) Representative: Grevin, Emmanuel
(86) International application number: PCT/EP2008/065120
(87) International publication number: WO 2009/062889

(56) References cited:
- EP-A- 1 521 433
- JP-A- 2003 018 282
- US-A1- 2002 151 334

## Description

### (Field of the invention)

The present invention relates to methods of selecting a set of phonebook entries in a card. It relates particularly to methods of selecting a set of phonebook entries in a subscriber identity card like a SIM card.

### (Prior art)

Several standards for SIM-based phonebook have been created and deployed in the Telecom domain. For example, the two Telecom standards 2G and 3G differ in the following features: the maximum number of entry that can be managed in a phonebook and the number and fields belonging to each entry of a phonebook. In particular, a phonebook compliant with the 2G standard cannot contain more than 255 entries when a phonebook compliant with the 3G standard may manage a large amount of entries depending on the available memory size. Both mobile equipments and SIM cards must implement one or several Telecom standards. Thus when a SIM card is connected to a mobile equipment, the phonebook standard managed by the mobile equipment may be different from the phonebook standard managed by the SIM card. In other words, mobile equipment and a connected SIM card may have different phonebook capabilities. In particular, when the phonebook capabilities of the mobile equipment are more limited than the phonebook capabilities of the SIM card, a user cannot take advantage of the whole content of the phonebook managed by the SIM card. Only the first N entries of the phonebook managed by the SIM card can be accessed through the mobile equipment, where N is the maximum phonebook entries according to the phonebook standard of the mobile equipment. All entries placed after the Nth position in the phonebook managed by the SIM card cannot be reached by the user via the mobile equipment.

The document EP1521433-A2 teaches a mobile telephone card wherein each entry of the card phonebook is stored at a position which is determined by applying a position calculation algorithm to the telephone number of the entry. This solution allows a faster retrieval.

The document JP2003/018282-A describes a USIM card wherein entries of the card phonebook are stored at a position which depends on parameters like the frequency of use or the call fees.

### (Summary of the Invention)

An object of the invention is to solve the above mentioned technical problem.

The object of the present invention is a subscriber identity card intended to exchange data with a connected mobile equipment. Said subscriber identity card comprises a microprocessor, a communication interface, a phonebook intended to comprise several entries, an operating system, first means for identifying properties of the connected mobile equipment. Said subscriber identity card also comprises a memory intended to store at least a relevancy marker, second means for spying exchanged data and updating the at least relevancy marker. Said subscriber identity card also comprises third means for selecting a set of phonebook entries according to a policy depending on the at least relevancy marker and on the connected mobile equipment properties.

Advantageously, the spied exchanged data may be a setup call and/or call control and/or SMS in and/or SMS out, and/or MMS in and/or MMS out.

The set of phonebook entries selected by third means may be ordered according to said relevancy marker.

Each phonebook entry may comprise several fields and said third means may select a subset of fields belonging to the selected set of phonebook entries.

Advantageously, each relevancy marker may comprise a plurality of counters, and each of said counters may be associated with a phonebook entry.

Alternatively, each relevancy marker may comprise a plurality of counters, and each of said counters may be associated with a field of phonebook entries.

Said subscriber identity card may comprise fourth means for prompting the connected mobile equipment to delete from the phonebook an entry which has not been used since a predefined period of time.

Another object of the invention is a method of selecting a set of phonebook entries in a subscriber identity card intended to exchange data with a connected mobile equipment. Said subscriber identity card has a microprocessor, a phonebook intended to comprise several entries, an operating system and first means for identifying properties of the connected mobile equipment. Said subscriber identity card also has a memory intended to store at least a relevancy marker, second means for spying exchanged data and for updating the at least relevancy marker and third means for selecting a set of phonebook entries. Said method comprises the following step:
a) identifying properties of the connected mobile equipment,
b) updating the relevancy marker according to spied exchanged data,
c) selecting a set of phonebook entries according to a policy depending on the relevancy marker and on the connected mobile equipment properties,
d) sending the selected set of phonebook entries to the connected mobile equipment.

Advantageously, said subscriber identity card may comprise a property database, and said first means may get an identifier from the connected mobile equipment. Properties of the connected mobile equipment may be identified according to the property database and said identifier.

Alternatively, said connected mobile equipment may send its properties to the subscriber identity card.

After a predefined event, said second means may prompt the connected mobile equipment to ask a refresh of the phonebook.

Advantageously, said predefined event may be a new phonebook entry creation and/or a deletion of a phonebook entry and/or an update operation of a relevancy marker.

The subscriber identity card may be issued by an operator and the policy of step c) may be defined by said operator and/or a user of the connected mobile equipment.

Advantageously, the policy of step c) may comprise a first set of rules related to incoming data and a second set of rules related to outgoing data.

Exchanged data spied by said second means may be incoming and/or outgoing messages and the selected entries may be ordered according to the relevancy marker.

Each phonebook entry may comprise a call address and a date of the last call, and the selected entries may be ordered according to the last called addresses.

Each phonebook entry may comprise a home network operator identifier and the selected entries may be ordered according to the home network operator identifier.

Each phonebook entry may comprise a type of message and the selected entries may be ordered according to the type of message.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically the architecture of a subscriber identity card of SIM smart card type according to the invention;
- Figure 2 is an example of algorithm for selecting a set of phonebook entries according to the invention;
- Figure 3 is an example of phonebook content in a SIM card;
- Figure 4 is an example of relevancy marker according to the invention; and
- Figure 5 is an example of a set of phonebook entries selected according to the invention.

### (Detailed description of the preferred embodiments)

The invention may apply to any types of electronic subscriber identity card managing a phonebook. In this specification, the subscriber identity card is a SIM card but it could be any other kind of electronic token comprising both subscriber identity data and phonebook data.

An advantage of the invention is to provide the mobile equipment user with a solution for accessing the more relevant data stored in the phonebook managed in the SIM card.

Another advantage of the invention is to allow customizing the subset of phonebook data displayed by the mobile equipment. The invention allows customizing several criteria according to user's needs: selection of relevant phonebook entries, selection of fields belonging to phonebook entries, order of selected phonebook entries.

Another advantage of the invention is to allow keeping the existing mobile equipments unchanged. The invention only requires the implementation of specific means in the SIM card.

The invention may apply to every phonebook managed in a subscriber identity card. In particular, it may apply to phonebooks having a first part of data stored into subscriber identity card and a second part of data stored outside the subscriber identity card.

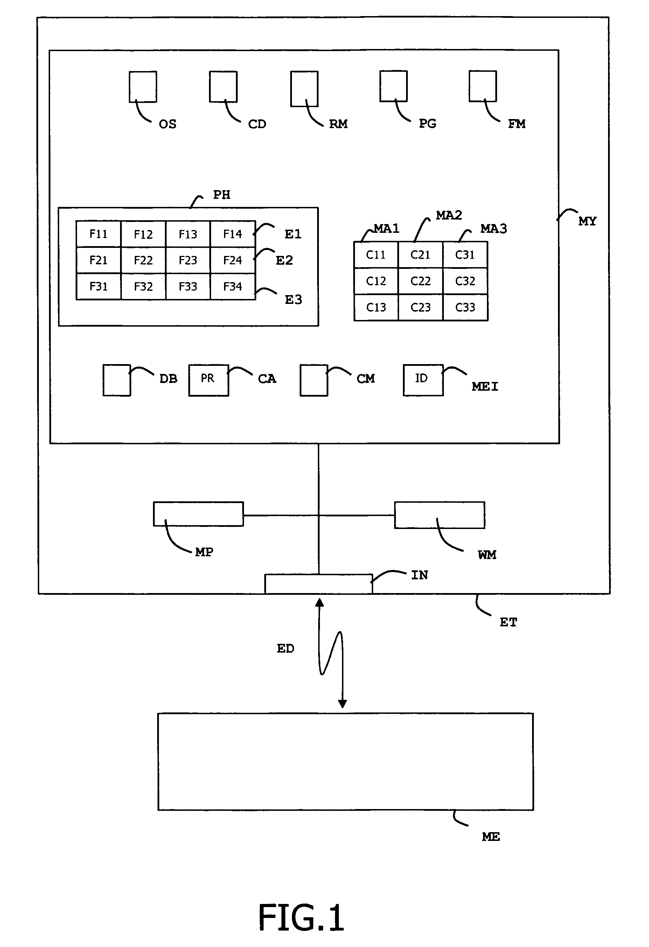

Figure 1 shows the architecture of a SIM card as an example of a subscriber identity card according to a preferred embodiment of the invention. The SIM card ET contains a microprocessor MP, a communication interface IN, a memory MY and a working memory WM like a RAM. The communication interface IN is connected to a mobile equipment ME and allows exchanging data ED with the connected mobile equipment ME. The memory MY is a non volatile memory like EEPROM or Flash memory. The memory MY contains an operating system OS, a phonebook PH, three relevancy markers MA1 to MA3 and an area CA for storing the mobile equipment properties PR. The memory MY contains first means CD able to identify the properties of the connected mobile equipment ME. The memory MY contains second means RM able to spy exchanged data ED and to update the relevancy markers MA1 to MA3. The memory MY contains third means PG able to select a set SE of phonebook entries E1, E2, E3. Each entry contains four fields F11 to F14. This example is not restrictive and each entry may contain more or less than four fields.

Third means PG use a policy depending on the relevancy markers MA1 to MA3 and on the connected mobile equipment properties PR for selecting the set of entries. Each relevancy marker contains several counters C11 to C13. The policy may be stored into the third means PG or in a dedicated memory area not shown on Figure 1. The memory MY contains fourth means FM able to prompt the connected mobile equipment ME to delete an entry from the phonebook PH. The fourth means FM may be activated when an entry has not been used since a predefined period of time. The memory MY contains an area MEI dedicated to storage of an identifier of the connected mobile equipment ME. The memory MY contains a property database DB storing properties of mobile equipments.

The memory MY may consist in a unique circuit or several circuits that may be of different types.

The operating system OS may comprise a virtual machine.

The microprocessor MP cooperates with the working memory WM and is intended to run the operating system OS. First, second, third and fourth means may be either software applications run by the microprocessor MP or hardware designed. The four means may be implemented as four distinct elements or merged in one or several elements.

In a preferred embodiment, the four means are implemented in a SimToolkit application.

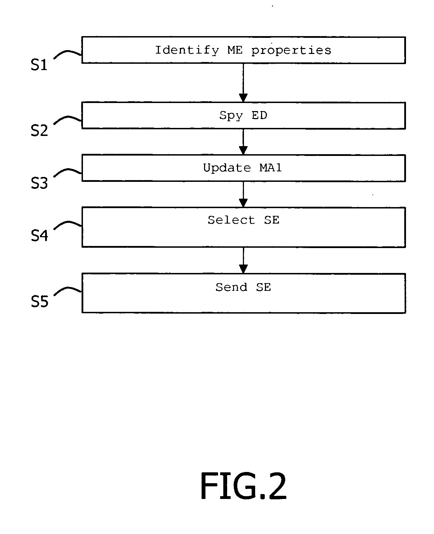

Figure 2 shows an example of algorithm for selecting a set of phonebook entries according to the invention. After the SIM card initialization done by the connected mobile phone ME, first means CD identify the properties PR of the connected mobile equipment ME at step S1. For example, the SIM card gets an identifier ID from the connected mobile equipment ME then finds the relevant properties PR by seeking in the property database DB. Then found properties PR may be stored in the CA area.

The SIM card may send a proactive command such as Provide Local Information command in order to get the identifier ID of the connected mobile phone ME.

Advantageously, the identifier ID retrieved by the SIM card may be an International Mobile Equipment Identity known as IMEI.

Alternatively the database DB may be stored in a distant server and the SIM card may retrieve the relevant properties from the distant server.

In another implementation, the mobile phone ME may send its phonebook capabilities to the SIM, for example into the Terminal Profile at SIM initialization stage.

Then the second means RM is activated and spies all data exchanges between the mobile equipment ME and the SIM card during step S2. In particular, second means RM spies each communication coming in or going out of the terminal equipment, and advantageously any action performed on the contacts of the terminal equipment.

Alternatively, the second means RM may be in the terminal equipment ME and the result of the spying may be stored into the SIM card.

When an outgoing/incoming message is spied, second means RM checks if the address of the caller or party called is stored inside the phonebook managed by the SIM card. If so, second means RM updates relevancy marker MA1 to MA3 at step S3. This update operation may be performed by incrementing a counter associated to the spied address.

When the connected mobile equipment asks for a refresh of the phonebook content, the third means PG is activated at step S4. The third means PG dynamically generates a set SE of phonebook entries according to a predefined policy, the mobile equipment properties PR and the whole content of the phonebook PH managed by the SIM card. For example if the SIM card has a phonebook compliant with the 3G standard and the mobile equipment has properties corresponding to the 2G standard, the third means PG will generate a set SE of 254 entries maximum.

Then at step S5, the generated set SE of phonebook entries is sent to the connected mobile equipment. For example, the generated set SE may correspond to the content of the EF_{ADN} file which is used by the connected mobile equipment for managing the phonebook.

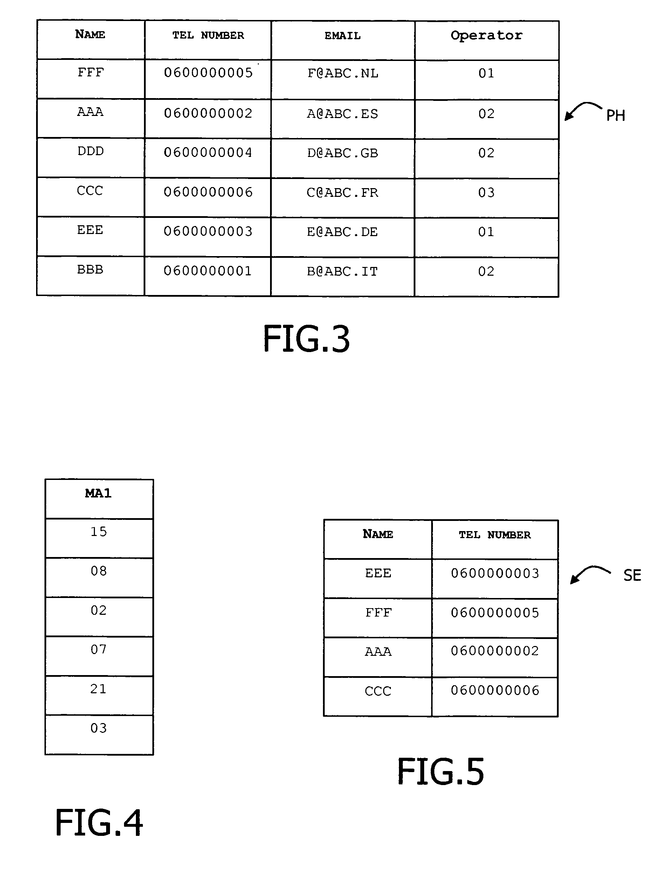

Figure 3 shows an example of phonebook contents managed by the SIM card. This phonebook PH contains four fields and six entries.

Figure 4 shows an example of relevancy marker MA1 stored in the memory MY. The relevancy marker MA1 contains six counters. Each counter is associated to a phonebook entry. In the example of Figure 4, the relevancy marker MA1 corresponds to the number of calls received for the associated phonebook entry.

The properties PR are assumed to be limited to a maximum of four entries and only the two fields Name and Tel Number managed by the mobile equipment. Assuming that the policy is set for selecting the most often called entries in a descending order, the set SE of phonebook entries generated by the third means PG is shown at Figure 5. The generated set SE contains four entries with a subset of two fields, ordered according to the relevancy market MA1.

Advantageously, the policy may contain several rules. Some rules may be related to incoming data and other rules may be related to outgoing data. The policy may be defined by the operator who issued the SIM card and/or the user of the connected mobile equipment. A dedicated application embedded in the SIM card and/or the mobile equipment may allow the update operation of said policy.

Alternatively, the relevancy marker and the policy used by the third means PG may be set for generating a set of phonebook entry chosen according to the type of message, the last called addresses or the only one belonging to the home network operator.

Advantageously, the relevancy markers may be updated by the operator and/or by the user of the connected mobile equipment.

Advantageously, the second means RM may get time data from the connected mobile equipment. The policy used by the third means PG may be set for generating a set of phonebook entry chosen according to the most used within a predefined period of time.

Alternatively, second means RM may get time data from a clock embedded in the subscriber identity card.

Advantageously, the SIM card may have fourth means FM able to prompt the connected mobile equipment ME to delete from the phonebook PH an entry not used since a predefined period of time.

Advantageously, when an entry is deleted from the phonebook PH, the associated counters of relevancy marker are reset. The reset operation may be performed by the second means RM.

Alternatively, the relevancy markers may contain several counters associated with fields of phonebook entry. For example, relevancy markers may contain four counters associated to each of four fields of the phonebook shown at Figure 1.

Advantageously, the second means RM may prompt the connected mobile equipment ME to ask a refresh of the phonebook PH when a predefined event occurs. This operation ensures that the mobile equipment gets the up-to-date phonebook contents.

Advantageously, the predefined event may be a creation of a new phonebook entry and/or a deletion of a phonebook entry and/or an update operation of a relevancy marker.

Advantageously, a dedicated counter CM may store a threshold value associated to the last generated set SE of phonebook entry. The counter CM may be stored in the memory MY. When an update operation of a relevancy marker is carried out by the second means RM, a comparison may be done between the counter CM and the new value of the updated relevancy marker. This comparison allows the SIM to check if the last generated set SE of phonebook entries is still up-to-date. If necessary the second means RM prompts the connected mobile equipment ME to ask a refresh of the phonebook.

## Claims

1. A subscriber identity card (ET) intended to exchange data (ED) with a connected mobile equipment (ME), said subscriber identity card (ET) comprising:
- a microprocessor (MP),
- a communication interface (IN),
- a phonebook (PH) intended to comprise several entries (E1, E2, E3),
- an operating system (OS),
**characterized in that** said subscriber identity card (ET) comprises:
- a first means (CD) for identifying properties (PR) of the connected mobile equipment (ME),
- a memory (MY) intended to store a relevancy marker (MA1), said relevancy marker comprising a plurality of counters (C11, C12, C13),
- second means (RM) for spying data (ED) exchanged between the subscriber identity card (ET) and the mobile equipment (ME) and for updating the relevancy marker (MA1) according to the data (ED) spied by said second means (RM), said second means (RM) being able to update the relevancy marker (MA1) by incrementing one of said counters when the data (ED) spied by said second means (RM) either targets one of the phonebook entries (E1 E2, E3) or is initiated by one of the phonebook entries (E1, E2, E3),
- third means (PG) for selecting a set (SE) of phonebook entries (E1, E2, E3) according to a policy depending on the relevancy marker (MA1) and on the connected mobile equipment properties (PR).

2. A subscriber identity card (ET) according to claim 1, wherein the data (ED) spied by said second means (RM) is a setup call and/or call control and/or SMS in and/or SMS out, and/or MMS in and/or MMS out.

3. A subscriber identity card (ET) according to one of claims 1 to 2, wherein the set (SE) of phonebook entries selected by third means (PG) is ordered according to said relevancy marker (MA1).

4. A subscriber identity card (ET) according to one of claims 1 to 3, wherein each phonebook entry (E1, E2, E3) comprises several fields (F11, F12, F13, F14) and wherein said third means (PG) selects a subset of fields belonging to the selected set (SE) of phonebook entries.

5. A subscriber identity card (ET) according to claim 4, wherein each of said counters (C11, C12, C13) is associated with a phonebook entry (E1, E2, E3).

6. A subscriber identity card (ET) according to claim 4, wherein each of said counters (C11, C12, C13) is associated with a field of phonebook entries (E1, E2, E3).

7. A subscriber identity card (ET) according to one of claims 1 to 6, wherein said subscriber identity card (ET) comprises fourth means (FM) for prompting the connected mobile equipment (ME) to delete from the phonebook (PH) an entry not used since a predefined period of time.

8. A method of selecting a set of phonebook (PH) entries in a subscriber identity card (ET) intended to exchange data (ED) with a connected mobile equipment (ME), said subscriber identity card (ET) having a microprocessor (MP), a phonebook (PH) intended to comprise several entries (E1, E2, E3), an operating system (OS), first means (CD) for identifying properties (PR) of the connected mobile equipment (ME), a memory (MY) intended to store a relevancy marker (MA1), second means (RM) for spying data (ED) exchanged between the subscriber identity card (ET) and the mobile equipment (ME) and for updating the relevancy marker (MA1), third means (PG) for selecting a set (SE) of phonebook entries (E1, E2, E3), said relevancy marker (MA1) comprising a plurality of counters (C11, C12, C13),
**characterized in that** said method comprises the following steps:
a) identifying (S1) properties (PR) of the connected mobile equipment (ME),
b) updating (S3) the relevancy marker (MA1) according to data (ED) spied by said second means (RM), the relevancy marker (MA1) being updated by incrementing one of said counters when the data (ED) spied by said second means (RM) either targets one of the phonebook entries (E1, E2, E3) or is initiated by one of the phonebook entries (E1, E2, E3),
c) selecting (S4) a set (SE) of phonebook entries according to a policy depending on the relevancy marker (MA1) and on the connected mobile equipment properties (PR),
d) sending (S5) the selected set (SE) of phonebook entries to the connected mobile equipment (ME).

9. A method according to claim 8, wherein said subscriber identity card (ET) comprises a property database (DB), wherein said first means (CD) gets an identifier (ID) from the connected mobile equipment (ME) and wherein properties of the connected mobile equipment (ME) are identified according to the property database (DB) and said identifier (ID).

10. A method according to claim 8, wherein said connected mobile equipment (ME) send its properties (PR) to the subscriber identity card (ET).

11. A method according to one of claims 8 to 10, wherein after a predefined event, said second means (RM) prompts the connected mobile equipment (ME) to ask a refresh of the phonebook (PH).

12. A method according to claim 11, wherein said predefined event is a new phonebook entry creation and/or a deletion of a phonebook entry and/or an update operation of a relevancy marker (MA1, MA2, MA3).

13. A method according to one of claims 8 to 12, wherein the subscriber identity card (ET) is issued by an operator and wherein the policy of step c) is defined by said operator and/or a user of the connected mobile equipment (ME).

14. A method according to one of claims 8 to 13, wherein the policy of step c) comprises a first set of rules related to incoming data and a second set of rules related to outgoing data.

15. A method according to one of claims 8 to 14, wherein exchanged data (ED) spied by said second means (RM) is incoming and/or outgoing messages and wherein the selected entries are ordered according to the relevancy marker (MA1, MA2, MA3).

## Patentansprüche

1. Eine Teilnehmer-Identitätskarte (ET), die Daten (ED) mit einer verbundenen mobilen Ausrüstung (ME) austauschen soll, wobei die besagte Teilnehmer-Identitätskarte (ET) folgende Teile umfasst:
- einen Mikroprozessor (MP),
- eine Kommunikationsschnittstelle (IN),
- ein Telefonbuch (PH), das mehrere Einträge (E1, E2, E3) enthalten soll,
- ein Betriebssystem (OS),
**dadurch gekennzeichnet, dass** die besagte Teilnehmer-Identitätskarte (ET) folgende Teile umfasst:
- ein erstes Mittel (CD) zur Identifizierung der Eigenschaften (PR) der verbundenen mobilen Ausrüstung (ME),
- einen Speicher (MY), der einen Relevanzmarkierung (MA1) speichern soll, wobei die besagte Relevanzmarkierung eine Mehrzahl von Zählern (C11, C12, C13) umfasst,
- ein zweites Mittel (RM) zum Ausspionieren von Daten (ED), die zwischen der Teilnehmer-Identitätskarte (ET) und der mobilen Ausrüstung (ME) ausgetauscht werden, und für die Aktualisierung der Relevanzmarkierung (MA1) nach den Daten (ED), die vom besagten zweiten Mittel (RM) ausspioniert werden, wobei das besagte zweite Mittel (RM) geeignet ist, die Relevanzmarkierung (MA1) zu aktualisieren, indem es einen der besagten Zähler hochzählt, wenn die vom besagten zweiten Mittel (RM) ausspionierten Daten (ED) entweder auf einen der Telefonbucheinträge (E1, E2, E3) abzielen oder von einem der Telefonbucheinträge (E1, E2, E3) ausgehen,
- ein drittes Mittel (PG) für das Wählen eines Satzes (SE) von Telefonbucheinträgen (E1, E2, E3) gemäß einer Politik, die von der Relevanzmarkierung (MA1) und von den Eigenschaften (PR) der verbundenen mobilen Ausrüstung abhängt.

2. Eine Teilnehmer-Identitätskarte (ET) nach Anspruch 1, **dadurch gekennzeichnet, dass** die vom besagten zweiten Mittel (RM) ausspionierten Daten (ED) ein Setup-Anruf und/oder Anrufkontrolle und/oder SMS ein und/oder SMS aus und/oder MMS ein und/oder MMS aus sind.

3. Eine Teilnehmer-Identitätskarte (ET) nach einem beliebigen der vorstehenden Ansprüche 1 bis 2, **dadurch gekennzeichnet, dass** der vom dritten Mittel (PG) gewählte Satz (SE) Telefonbucheinträge nach der besagten Relevanzmarkierung (MA1) geordnet ist.

4. Eine Teilnehmer-Identitätskarte (ET) nach einem beliebigen der vorstehenden Ansprüche 1 bis 3, **dadurch gekennzeichnet, dass** jeder Telefonbucheintrag (E1, E2, E3) mehrere Felder (F11, F12, F13, F14) umfasst, und **dadurch**, dass das besagte dritte Mittel (PG) einen Sekundärsatz von Feldern wählt, die zum gewählten Satz (SE) von Telefonbucheinträgen gehören.

5. Eine Teilnehmer-Identitätskarte (ET) nach Anspruch 4, **dadurch gekennzeichnet, dass** jeder der besagten Zähler (C11, C12, C13) zu einem Telefonbucheintrag (E1, E2, E3) gehört.

6. Eine Teilnehmer-Identitätskarte (ET) nach Anspruch 4, **dadurch gekennzeichnet, dass** jeder der besagten Zähler (C11, C12, C13) zu einem Feld von Telefonbucheinträgen (E1, E2, E3) gehört.

7. Eine Teilnehmer-Identitätskarte (ET) nach einem beliebigen der vorstehenden Ansprüche 1 bis 6, **dadurch gekennzeichnet, dass** die besagte Teilnehmer-Identitätskarte (ET) vierte Mittel (FM) umfasst, die die verbundene mobile Ausrüstung (ME) auffordern, aus dem Telefonbuch (PH) einen Eintrag zu löschen, der seit einer vordefinierten Zeitperiode nicht benutzt wurde.

8. Eine Methode zum Wählen eines Satzes von Telefonbucheinträgen (PH) in einer Teilnehmer-Identitätskarte (ET), der Daten (ED) mit einer verbundenen mobilen Ausrüstung (ME) austauschen soll, wobei die besagte Teilnehmer-Identitätskarte (ET) einen Mikroprozessor (MP) hat, ein Telefonbuch (PH), das mehrere Einträge (E1, E2, E3) umfassen soll, ein Betriebssystem (OS), erste Mittel (CD) zum Erkennen von Eigenschaften (PR) der verbundenen mobilen Ausrüstung (ME), einen Speicher (MY), der eine Relevanzmarkierung (MA1) speichern soll, ein zweites Mittel (RM) zum Ausspionieren von Daten (ED), die zwischen der Teilnehmer-Identitätskarte (ET) und der mobilen Ausrüstung (ME) ausgetauscht werden und für die Aktualisierung der Relevanzmarkierung (MA1), dritte Mittel (PG) zum Wählen eines Satzes (SE) von Telefonbucheinträgen (E1, E2, E3), wobei die besagte Relevanzmarkierung (MA1) eine Mehrzahl von Zählern (C11, C12, C13) umfasst,
**dadurch gekennzeichnet, dass** die besagte Methode die folgenden Schritte umfasst:
a) Erkennen (S1) der Eigenschaften (PR) der verbundenen mobilen Ausrüstung (ME),
b) Aktualisieren (S3) der Relevanzmarkierung (MA1) nach den Daten (ED), die vom besagten zweiten Mittel (RM) ausspioniert wurden, wobei die Relevanzmarkierung (MA1) durch Hochzählen eines der besagten Zähler aktualisiert wird, wenn die vom besagten zweiten Mittel (RM) ausspionierten Daten (ED) entweder auf einen der Telefonbucheinträge (E1, E2, E3) abzielen oder von einem der Telefonbucheinträge (E1, E2, E3) ausgehen,
c) Wählen (S4) eines Satzes (SE) von Telefonbucheinträgen gemäß einer Politik, die von der Relevanzmarkierung (MA1) und von den Eigenschaften (PR) der verbundenen mobilen Ausrüstung abhängt,
d) Senden (S5) des gewählten Satzes (SE) von Telefonbucheinträgen an die verbundene mobile Ausrüstung (ME).

9. Eine Methode nach Anspruch 8, **dadurch gekennzeichnet, dass** die besagte Teilnehmer-Identitätskarte (ET) eine Eigner-Datenbank (DB) umfasst, **dadurch**, dass das besagte erste Mittel (CD) einen Identifikator (ID) von der verbundenen mobilen Ausrüstung (ME) bekommt, und **dadurch**, dass Eigenschaften der verbundenen mobilen Ausrüstung (ME) nach der Eigner-Datenbank (DB) und dem besagten Identifikator (ID) identifiziert werden.

10. Eine Methode nach Anspruch 8, **dadurch gekennzeichnet, dass** die besagte mobile Ausrüstung (ME) ihre Eigenschaften (PR) an die Teilnehmer-Identitätskarte (ET) sendet.

11. Eine Methode nach einem beliebigen der vorstehenden Ansprüche 8 bis 10, **dadurch gekennzeichnet, dass** nach einem vordefinierten Ereignis das besagte zweite Mittel (RM) die verbundene mobile Ausrüstung (ME) auffordert, eine Auffrischung des Telefonbuchs (PH) anzufordern.

12. Eine Methode nach Anspruch 11, **dadurch gekennzeichnet, dass** das besagte vordefinierte Ereignis das Anlegen eines neuen Telefonbucheintrags und/oder ein Löschen eines Telefonbucheintrags und/oder ein Aktualisierungsvorgang einer Relevanzmarkierung (MA1, MA2, MA3) ist.

13. Eine Methode nach einem beliebigen der vorstehenden Ansprüche 8 bis 12, **dadurch gekennzeichnet, dass** die Teilnehmer-Identitätskarte (ET) von einem Anbieter ausgefertigt wird, und **dadurch**, dass die Politik des Schritts c) vom besagten Anbieter und/oder einem Benutzer der verbundenen mobilen Ausrüstung (ME) definiert wird.

14. Eine Methode nach einem beliebigen der vorstehenden Ansprüche 8 bis 13, **dadurch gekennzeichnet, dass** die Politik des Schritts c) einen ersten Satz von Regeln in Bezug zu den ankommenden Daten und einen zweiten Satz Regeln in Bezug zu den ausgehenden Daten umfasst.

15. Eine Methode nach einem beliebigen der vorstehenden Ansprüche 8 bis 14, **dadurch gekennzeichnet, dass** ausgetauschte Daten (ED), die vom besagten zweiten Mittel (RM) ausspioniert werden, ankommende und/oder ausgehende Meldungen sind, und **dadurch**, dass die gewählten Einträge gemäß Relevanzmarkierung (MA1, MA2, MA3) geordnet sind.

## Revendications

1. Carte d'identité de l'abonné (ET) destinée à échanger des données (ED) avec un matériel mobile (ME) connecté, ladite carte d'identité de l'abonné (ET) comprenant:
- un microprocesseur (MP),
- une interface de communication (IN),
- un répertoire téléphonique (PH) destiné à comprendre plusieurs entrées (E1, E2, E3),
- un système d'exploitation (OS),
**caractérisée en ce que** ladite carte d'identité de l'abonné (ET) comprend :
- un premier moyen (CD) permettant d'identifier les propriétés (PR) du matériel mobile (ME) connecté,
- une mémoire (MY) destinée à stocker un marqueur de pertinence (MA1), ledit marqueur de pertinence (MA1) comprenant une pluralité de compteurs (C11, C12, C13),
- un deuxième moyen (RM) permettant de découvrir des données (ED) échangées entre la carte d'identité de l'abonné (ET) et le matériel mobile (ME) connecté et de mettre à jour le marqueur de pertinence (MA1) en fonction des données (ED) découvertes par ledit deuxième moyen (RM), ledit deuxième moyen (RM) étant capable de mettre à jour le marqueur de pertinence (MA1) en incrémentant l'un desdits compteurs lorsque les données découvertes par ledit deuxième moyen (RM) soit visent l'une des entrées du répertoire téléphonique (E1, E2, E3), soit sont initiées par l'une des entrées du répertoire téléphonique (E1, E2, E3),
- un troisième moyen (PG) permettant de sélectionner un ensemble (SE) d'entrées du répertoire téléphonique (E1, E2, E3) en fonction de modalités dépendant du marqueur de pertinence (MA1) et des propriétés (PR) du matériel mobile (ME) connecté.

2. Carte d'identité de l'abonné (ET) selon la revendication 1, dans laquelle les données (ED) découvertes par ledit deuxième moyen (RM) sont un appel de mise au point et/ou un appel de contrôle et/ou un SMS entrant et/ou un SMS sortant, et/ou un MMS entrant et/ou un MMS sortant.

3. Carte d'identité de l'abonné (ET) selon l'une des revendications 1 ou 2, dans laquelle l'ensemble (SE) des entrées du répertoire téléphonique sélectionné par le troisième moyen (PG) est ordonné en fonction dudit marqueur de pertinence (MA1).

4. Carte d'identité de l'abonné (ET) selon l'une des revendications 1 à 3, dans laquelle chaque entrée du répertoire téléphonique (E1, E2, E3) comprend plusieurs champs (F11, F12, F13, F14) et dans laquelle ledit troisième moyen (PG) sélectionne un sous-ensemble de champs appartenant à l'ensemble sélectionné (SE) d'entrées de répertoire téléphonique.

5. Carte d'identité de l'abonné (ET) selon la revendication 4, dans laquelle chacun desdits compteurs (C11, C12, C13) est associé à une entrée de répertoire téléphonique (E1, E2, E3).

6. Carte d'identité de l'abonné (ET) selon la revendication 4, dans laquelle chacun desdits compteurs (C11, C12, C13) est associé à un champ des entrées de répertoire téléphonique (E1, E2, E3).

7. Carte d'identité de l'abonné (ET) selon l'une des revendications 1 à 6, dans laquelle ladite carte d'identité de l'abonné (ET) comprend quatre moyens (FM) permettant d'inviter le matériel mobile (ME) connecté à effacer dans le répertoire téléphonique (PH) une entrée non utilisée depuis un temps prédéterminé.

8. Procédé de sélection d'un ensemble d'entrées de répertoire téléphonique (PH) dans une carte d'identité de l'abonné (ET) destinée à échanger des données (ED) avec un matériel mobile (ME) connecté, ladite carte d'identité de l'abonné (ET) ayant un microprocesseur (MP), un répertoire téléphonique (PH) destiné à comprendre plusieurs entrées (E1, E2, E3), un système d'exploitation (OS), un premier moyen (CD) permettant d'identifier les propriétés (PR) du matériel mobile (ME) connecté, une mémoire (MY) destinée à stocker un marqueur de pertinence (MA1), un deuxième moyen (RM) permettant de découvrir des données (ED) échangées entre la carte d'identité de l'abonné (ET) et le matériel mobile (ME) connecté et de mettre à jour le marqueur de pertinence (MA1), un troisième moyen (PG) permettant de sélectionner un ensemble (SE) d'entrées du répertoire téléphonique (E1, E2, E3), ledit marqueur de pertinence (MA1) comprenant une pluralité de compteurs (C11, C12, C13),
**caractérisé en ce que** ledit procédé comprend les étapes suivantes:
a) identifier (S1) les propriétés (PR) du matériel mobile (ME) connecté,
b) mettre à jour (S3) le marqueur de pertinence (MA1) en fonction des données (ED) découvertes par ledit deuxième moyen (RM), le marqueur de pertinence (MA1) étant mis à jour par incrémentation de l'un desdits compteurs lorsque les données (ED) découvertes par ledit deuxième moyen (RM) soit visent l'une des entrées du répertoire téléphonique (E1, E2, E3), soit sont initiées par l'une des entrées du répertoire téléphonique (E1, E2, E3),
c) sélectionner (S4) un ensemble (SE) d'entrées de répertoire téléphonique en fonction de modalités dépendant du marqueur de pertinence (MA1) et des propriétés de matériel mobile connecté (PR),
d) envoyer (S5) l'ensemble sélectionné (SE) d'entrées de répertoire téléphonique au matériel mobile (ME) connecté.

9. Procédé selon la revendication 8, dans lequel ladite carte d'identité de l'abonné (ET) comprend une base de données de propriétés (DB), dans lequel ledit premier moyen (CD) obtient un identifiant (ID) du matériel mobile (ME) connecté et dans lequel les propriétés du matériel mobile (ME) connecté sont identifiées en fonction de la base de données (DB) de propriétés et dudit identifiant (ID).

10. Procédé selon la revendication 8, dans lequel ledit matériel mobile (ME) connecté envoie ses propriétés (PR) à la carte d'identité de l'abonné (ET).

11. Procédé selon l'une des revendications 8 à 10, dans lequel après un événement prédéfini, ledit deuxième moyen (RM) invite le matériel mobile (ME) connecté à demander un rafraichissement du répertoire téléphonique (PH).

12. Procédé selon la revendication 11, dans lequel ledit événement prédéfini est une opération de création d'une nouvelle entrée de répertoire téléphonique et/ou de suppression d'une entrée de répertoire téléphonique et/ou de mise à jour d'un marqueur de pertinence (MA1, MA2, MA3).

13. Procédé selon l'une des revendications 8 à 12, dans lequel la carte d'identité de l'abonné (ET) est délivrée par un opérateur et dans lequel les modalités de l'étape c) sont définies par ledit opérateur et/ou un utilisateur du matériel mobile (ME) connecté.

14. Procédé selon l'une des revendications 8 à 13, dans lequel les modalités de l'étape c) comprennent un premier ensemble de règles liées aux données entrantes et un deuxième ensemble de règles liées aux données sortantes.

15. Procédé selon l'une des revendications 8 à 14, dans lequel les données échangées (ED) découvertes par ledit deuxième moyen (RM) sont des messages entrants et/ou sortants et dans lequel les entrées sélectionnées sont ordonnées en fonction du marqueur de pertinence (MA1, MA2, MA3).
